# EUROPEAN PATENT SPECIFICATION

(11) **EP 2 185 380 B1**
(45) Date of publication and mention of the grant of the patent: **03.08.2011**
(21) Application number: 08719313.2
(22) Date of filing: 04.03.2008
(51) Int. Cl.: B60P 3/025, A47F 5/10, A47F 9/00, A47F 3/00

(54) **COUNTER FOR VENDING VANS, VENDING VAN AND RELATED SYSTEM**
TRESEN FÜR VERKAUFSWAGEN, VERKAUFSWAGEN UND VERWANDTES SYSTEM
COMPTOIR POUR CAMIONNETTES, CAMIONNETTE ET SYSTÈME CONNEXE

(30) Priority: 14.09.2007 IT VI20070251
(43) Date of publication of application: 19.05.2010
(73) Proprietor: Sperotto S.P.A. Carrozzerie Industriali, 36030 Sarcedo (IT)
(72) Inventor: BASILE, Giuseppe, I-36030 Sarcedo (VI) (IT)
(74) Representative: Ziliotto, Tiziano
(86) International application number: PCT/IB2008/000617
(87) International publication number: WO 2009/034423

(56) References cited:
- EP-A- 1 232 904
- CH-A5- 695 437
- DE-U1- 9 114 041
- US-A- 1 599 911
- US-A- 4 513 984

## Description

The invention relates to the sector of vehicles equipped for itinerant sales, also called vending vans.

In particular, the present invention concerns a counter for vending vans, as well as a corresponding vending van.

As is known, in the sector of itinerant sales vehicles called vending vans are widely used for transporting, preserving, exhibiting and selling goods to the public.

The above mentioned vehicles are usually equipped with a display counter that allows the customer to see the products on sale, and furthermore with various machinery like for example refrigerators, ovens, deep fryers, slicers, ice-cream machines, as well as display cases on the walls, shelves and other pieces of furniture.

In some known embodiments of vending vans, said display counter is incorporated in the vending van itself and, in particular, it is fixed and cannot be unloaded e.g. as disclosed in US 4513984.

This means that the goods on sale are not exhibited in direct contact with the public and the salespeople who stand behind the counter must work at a certain, not negligible distance from the public, with consequent discomfort for both of them.

Another drawback posed by the known solutions lies in that the counter is rather bulky and occupies considerable space inside the loading compartment of the vending van. This considerably reduces the volume available for positioning the machinery and furniture mentioned above, as well as the space where the operator moves.

In order to solve these problems, at least partially, according to the known state of the art vending vans are used in which the display counter can be unloaded, that is, can be moved out of the loading compartment of the vending van and placed on the ground once the vehicle has been parked.

According to these further known solutions, pieces of equipment are used, which are mounted on the vehicle serving as a vending van and are suitable for drawing the display counter, displacing it and positioning it on the ground outside the vehicle.

These pieces of equipment comprise articulated arms arranged on the roof of the vending van and provided with hooks for grasping the counter.

A first drawback posed by these known solutions is represented by the fact that the above mentioned pieces of equipment are complicated and expensive.

A further drawback lies in that their installation requires special operations for reinforcing the parts of the vending van structure that must sustain said pieces of equipment as well as the load lifted by them.

A further drawback connected to the preceding one is represented by the fact that said reinforcing operations considerably affect the cost of the vending van. Another drawback lies in that the articulated arms positioned in the upper part of the vehicle lift the centre of gravity of the latter, making it less stable and balanced and thus more subject to oscillations, pitching and dangerous unbalancing.

Another drawback is represented by the fact that the pieces of equipment mentioned above are costly, bulky and heavy, and they reduce the load-bearing capacity of the vending van.

A further drawback is constituted by the fact that much power is required for operating said equipment, considering the high load they have to lift.

Further known solutions of vending vans with unloadable display counter involve the use of complicated kinematic mechanisms consisting of various elements that must move in a coordinated manner to ensure that the counter remains in a horizontal position during its displacement

Another drawback posed by these further known solutions lies in that said mechanisms comprise a considerable number of components and consequently assembly and maintenance operations are rather complex.

A further drawback is represented by the fact that the installation of these mechanisms involves major changes to the chassis and/or other parts of the vending van.

A further drawback lies in that they are rather noisy during operation and require continuous maintenance.

A further drawback posed by the vending vans of known type comprising an unloadable display counter lies in that the equipment and the mechanisms mentioned above allow the counter to be placed on the ground at a limited distance from the side of the vending van.

Furthermore, said distance is not enough to ensure that the salespeople can comfortably stand behind the counter and/or pass between the counter and the side of the vending van.

For this reason, the operator must intervene manually to move the counter at such a distance from the side of the vending van to enable the counter to be used comfortably.

The object of the present invention is to overcome the drawbacks described above.

In particular, a first object of the invention is to construct a counter for displaying goods, to be used in vending vans and/or vehicles for itinerant sales in general, as well as a vending van comprising said counter that enable the previously-mentioned drawbacks to be overcome.

It is a further object of the invention to construct a counter that, when the vending van is parked, can be handled and/or moved out of the loading compartment of the vending van in which it is contained in a simple, comfortable and automatic manner.

A further object of the present invention is to construct a counter that can be moved from at least one resting position inside the vending van in which it is contained to at least one working position preferably on the ground and outside said vending van for the display of products and at any distance from the side of the vending van.

It is a further object of the invention to construct a counter that can be handled and/or unloaded without the aid of complex equipment and mechanisms that pose the drawbacks described above.

It is another object of the invention to construct a counter that can be moved and/or unloaded using less power than that required by the known equipment and systems for counters having the same weight.

It is another object of the invention to construct a counter whose height can be adjusted and that can be levelled easily and rapidly when in working position, in such a way as to offer the customers the best possible view of the products on sale and enable them to make their choice.

It is another object of the invention to develop a vending van comprising a counter that requires slight structural modifications of the vending van.

Another object of the present invention is to construct a vending van and a corresponding counter that are economical and easy to use, as well as being easy to carry out.

The objects described above are achieved by a counter for vending vans and a corresponding vending van described and characterised in the respective independent claims.

Advantageous embodiments of the invention are the subject of the dependent claims.

The proposed solution advantageously makes it possible to construct a counter for vending vans that can be brought down to the ground and at any distance and position with respect to the side of the vehicle that transports it.

This also allows the salespeople to comfortably move between the vending van and the counter and to be positioned as near as possible to the customers standing before the counter.

Still advantageously, the proposed solution makes it possible to construct a counter that can be moved and/or unloaded using means that are independent of the vending van that contains it.

Still advantageously, when the counter is positioned on the ground outside the vending van, the proposed solution makes it possible to exploit the whole volume of the loading compartment of the vending van for fitting shelves, refrigerators, ovens, various machinery and equipment.

Still advantageously, the proposed solution makes it possible to construct a counter that can be moved and/or brought outside the vending van without causing dangerous oscillations and unbalancing of the vending van itself.

Still advantageously, the proposed solution makes it possible to construct a counter for vending vans that, if necessary, can be brought into a working position from which the shopkeeper can sell the goods while remaining inside the vending van.

Still advantageously, the proposed solution enables a vending van comprising a counter to be carried out, wherein the floor of the loading compartment does not present any interruptions when the counter is in working position.

The aims and advantages described above will be highlighted in greater detail in the description of some preferred embodiments of the invention, supplied as examples without limitation, with reference to the attached drawings, wherein:
- Figure 1 shows a schematic front view of an example of embodiment of a counter carried out according to the invention;
- Figure 2 shows a schematic side view of the counter of Figure 1 in a first position;
- Figure 3 shows a schematic view of the counter of Figure 1 in a different working position;

- Figure 4 shows a schematic side view of an example of embodiment of a vending van carried out according to the invention comprising the counter of Figure 1;
- Figure 5 shows a plan view of a portion of the vending van of Figure 4 without the counter of Figure 1;
- Figure 6 shows a schematic cross-sectional view of the vending van of Figure 5 with open loading compartment;
- Figures from 7 to 10 each show a schematic cross-sectional view of the vending van of Figure 5 with open loading compartment and in different working positions.

First of all it is important to point out that corresponding components in different examples of embodiments are indicated by the same reference numbers.

The position indications given in the different examples of embodiment should be transferred to the new position.

It is also important to underline that, for a better understanding of the schematic diagrams attached, some parts of the non-limiting examples of embodiment shown have been represented using dotted lines.

The embodiments of the invention described below refer to a counter for vehicles equipped for itinerant sales of the so-called vending van type.

Clearly, however, the proposed solution can also be applied to other types of vehicles requiring counters with functions similar to those of the counter that is the subject of the invention.

An example of embodiment of a counter 1 forming the subject of the present invention is illustrated in Figures from 1 to 5.

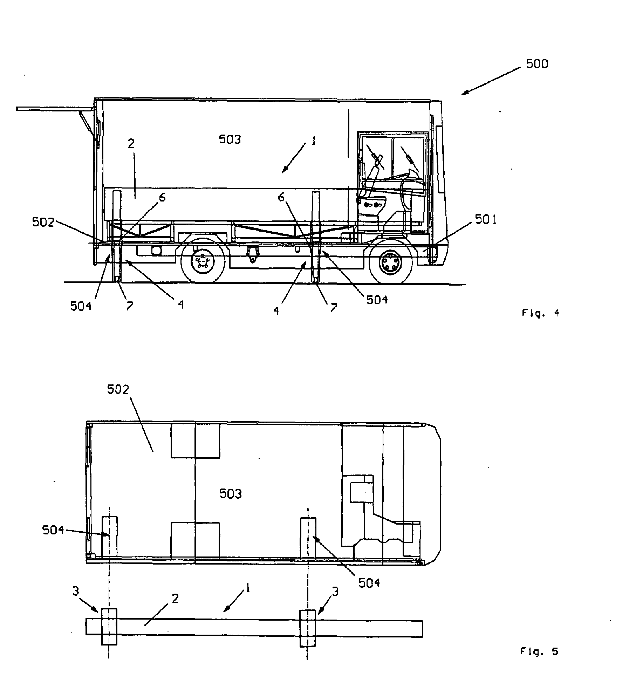

It is suitable for being preferably contained in a vending van, of the type indicated by number 500 in Figure 4, so that it can be transported where desired and substantially comprises a glass counter top 2 suitable for containing the goods to be exhibited to the customers for sale.

According to the invention, the counter 1 comprises at least one withdrawable supporting element indicated as a whole by 3 provided with at least one support 5 suited to be placed in contact with the ground S.

Advantageously, said withdrawable supporting element 3, for example when it is placed in contact with the ground S, makes it possible to support the glass counter top 2 and to move the counter 1 independently of the vending van in order to position it as desired.

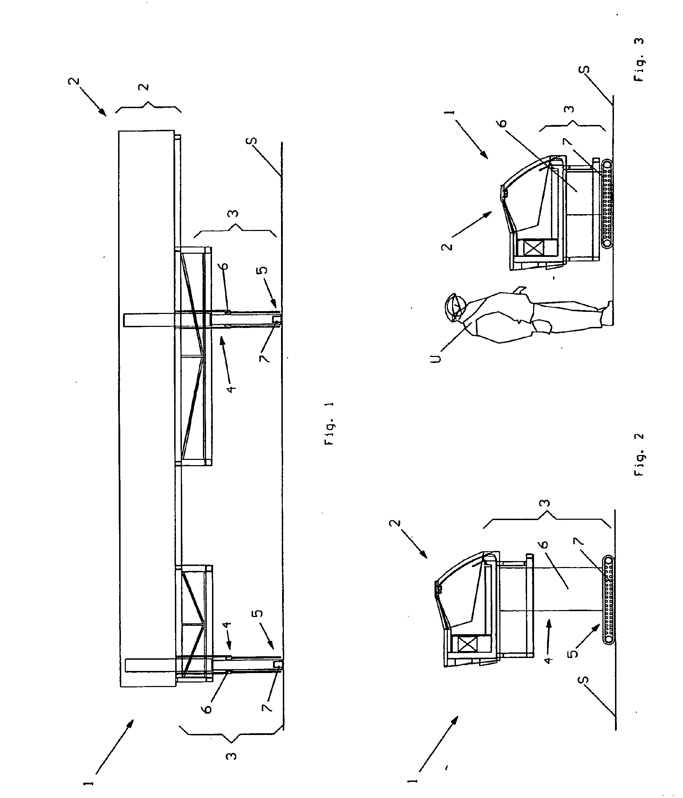

In the preferred non-limiting embodiment of the invention represented herein, the supporting elements 3 are two, as can be seen in particular in Figure 1, and the supports 5 are motorized.

Each one of them comprises a supporting member 4 connected at one end with the glass counter top 2 and at the other end with the motorized support 5.

It should be noted that, in the preferred non-limiting embodiment of the invention, each withdrawable supporting member 4 advantageously allows the counter 1 to be raised/lowered with respect to the ground S, as shown in Figures 2 and 3.

The withdrawable supporting members 4 make it also possible to adjust the height of the glass counter top 2 with respect to the ground S as desired, and to make it perfectly horizontal.

This advantageously makes it possible to exhibit the goods efficaciously for sale to the public, thus meeting the consumers' needs.

In particular, in the preferred non-limiting embodiment illustrated, the withdrawable supporting members 4 comprise telescopic legs, indicated by 6 in the Figures from 1 to 3. Said telescopic legs 6 are operated by actuator means, not shown herein, manually or automatically controlled via a control unit that is not shown, either.

More precisely, the extension and withdrawal of the legs 6 can be obtained via actuator means comprising hydraulic and/or pneumatic pistons and/or via mechanical systems.

According to another embodiment of the invention not illustrated herein, the withdrawable supporting members 4 comprise legs of the so-called articulated parallelogram type.

It is clear that in other construction variants not illustrated herein the withdrawable supporting members may comprise columns or elements performing functions similar to those described above.

As regards the motorized support 5, in the non-limiting example of embodiment illustrated herein it comprises at least one track indicated by 7 in the Figures from 1 to 3, moved by power means preferably consisting of at least one preferably electric motor.

More precisely, the electric motor is suited to be operated in order to move the counter 1 forward or backward at a speed that can be adjusted, even manually, by the operator via the control unit described above.

It is clear that, alternatively, the power means can be of the combustion, pneumatic or hydraulic type.

It is worth noting that the track 7 advantageously ensures suitable grip and adhesion of the supporting element 3 even on irregular and yielding ground, like for example ondulated and/or uneven and/or muddy ground and/or snow and/or ice and/or sand.

In the preferred embodiment of the invention illustrated herein, the speed of each of the motorized supports 5 can be changed independently of the speed of the other support 5, via the control unit mentioned above.

This makes it possible to steer the counter 1 even with reduced radiuses, by simply stopping one of the two motorized supports 5 or if necessary rotating the counter 1 around a corresponding central vertical axis by operating the two supports 5 in opposite directions or at different speeds.

According to another preferred embodiment of the invention not illustrated herein, the motorized supports 5 are steering parts, that is, parts that rotate around a vertical axis.

According to a further preferred embodiment of the counter not illustrated herein, the support 5 comprises one or more wheels and/or balls moved by the above mentioned power means.

According to another preferred embodiment of the invention not illustrated herein, the motorized supports 5 are connected to each other via transmission means comprising a transmission shaft powered by an electric motor.

It is clear, however, that in other non-limiting embodiments of the invention the support 5 can be non-motorized and comprise wheels and/or more generally idle rotating elements that allow the operator to move the counter 1 manually once the supports 5 are positioned in contact with the ground (S).

As regards the control unit, this is suited to control the movements of the counter 1. More particularly, it is suited to control the raising/lowering movements of the counter 1 with respect to the ground along a vertical axis.

It is also suited to control the forward/backward travel movements of the counter 1 along a horizontal plane and any steering movements and/or changes of direction.

More particularly, the control unit comprises interface means preferably consisting of push buttons and/or keyboards that can be used by the operator to activate the various actuators and move the counter 1.

The control unit is preferably made up of electric devices with microprocessor and/or wired electronics and may also comprise display means consisting for example of a display for setting/displaying the condition and/or the height of the counter with respect to the ground.

The control unit may also comprise a remote control unit consisting for example of a radio control that advantageously allows the operator to move freely while he/she displaces the counter 1.

It should also be noted that this control unit may cooperate with or comprise means for recording the position assumed by the counter 1 with respect to the ground S and/or the vending van 500.

These recording means preferably comprise position sensors like for example linear and/or optical and/or ultrasound and/or laser encoders and/or photocells.

According to a further preferred embodiment of the invention, the control unit also comprises electronic levelling means suited to automatically control the withdrawable supporting members 4 in order to level the counter 1 and keep the glass counter top 2 substantially horizontal.

These levelling means cooperate with said recording means and preferably comprise an electronic level.

Here below is the description of an example of embodiment of a vending van, which is also the subject of the present invention, comprising at least one counter 1 subject of the invention.

Said vending van is illustrated in Figures from 4 to 10, where it is indicated as a whole by number 500.

It comprises a motorized vehicle provided with a chassis 501 supporting a platform 502 that occupies a loading area 503 of the vehicle, at least one counter 1 for the display of goods to the public for sale being positioned on said platform 502.

In the preferred embodiment of the invention illustrated herein, the platform 502 is provided with at least one through opening 504, visible in particular in Figure 5, suited to house the motorized supporting element 3 of the counter 1.

It should also be observed that the proposed solution enables the counter 1 to be advantageously and rapidly loaded/unloaded on/from the loading compartment 503.

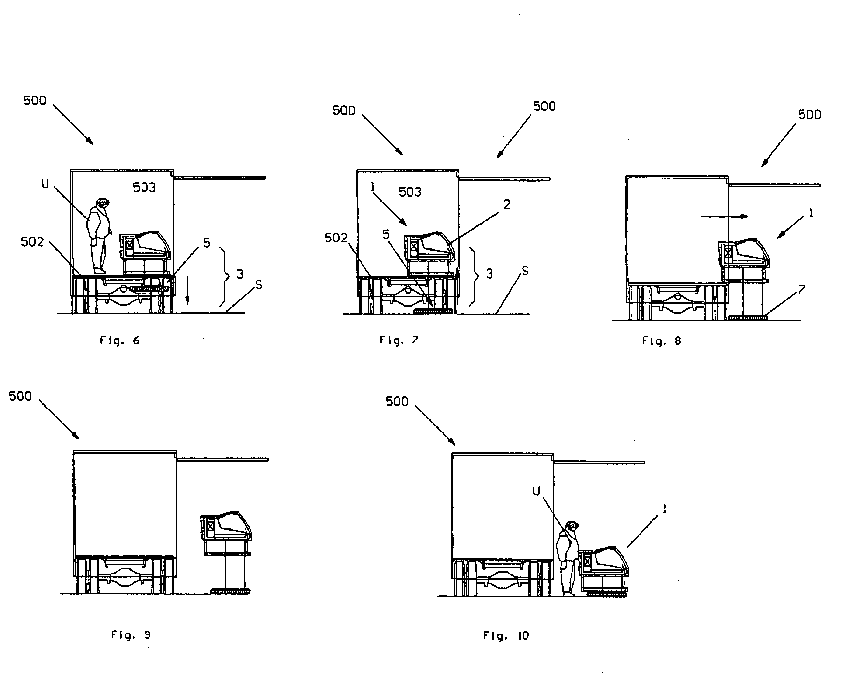

It should be noted, in fact, that when the counter 1 is arranged with the motorized supporting elements 3 at the level of the through openings 504, the withdrawable supporting members 4 allow the motorized supporting elements 3 to move from a first resting position raised from the ground S, shown in Figure 6, to at least a second working position in contact with the ground S, shown in Figure 7.

It should be noted that when the supports are in the resting position, the counter 1 rests on the platform 502 of the vending van 500.

Vice versa, when the supports 5 are in the working position, the counter 1 does not rest on the platform 502 and therefore is disconnected from the vending van 500.

This advantageously enables the counter 1 to be loaded/unloaded on/from the loading compartment 503 as will be described in greater detail below.

It should be noted that advantageously the vending van 500 requires minimal structural modifications in order to accomodate the counter 1.

The operation of the vending van 500 will now be described making reference to the particular embodiment represented in the Figures from 6 to 10, since there are no substantial differences from the other embodiments described.

In practice, the operator U, once having reached the place where he/she intends to sell the goods, opens the side of the vending van 500 to obtain the configuration shown in Figure 6.

He/she successively provides for activating the telescopic legs 6 of the counter 1 by taking action on the means for interfacing with the control unit, for example via the control buttons.

Said unit activates the actuator means of the legs 6, which thus provide for extending the legs 6 to bring the tracks 7 in contact with the ground S and successively to raise the glass counter top 2 from the loading platform 502, as shown in Figure 7.

Successively, when the counter 500 is completely raised from the platform 502 and is free and released from the vehicle 500, the operator can activate the tracks 7.

The counter 1 can thus be moved and brought for example into the working position shown in Figure 8. It is also clear that, by controlling the tracks 7 as described above, the operator can advantageously make the counter 1 rotate and/or move forward and/or move backward until reaching the desired position, for example the position shown in Figure 9, where the back of the counter 1 is near the side edge of the platform 502, or an intermediate position between the two.

Advantageously, once having reached the desired position, the operator U may, by taking action on the control unit, also raise and/or lower the glass counter top 2 to bring it to the desired height suitable for the type of product to be sold, as shown for example in Figure 10.

More precisely, to do so he/she takes action on the control unit via the interface means, in such a way as to operate the withdrawable supporting members.

It should be noted that the proposed solution allows the operator to get on the platform 502 and work behind the counter 1 inside the loading area 503, as shown in Figure 8. It is important to observe that in this case the counter 1 still occupies, at least partially, the loading compartment 503.

This advantageously allows the operator U to carry out his/her activity also when, due to various reasons, for example the limited space available, it is not possible for him to work from the ground.

The proposed solution advantageously enables the counter I to assume any working position outside the loading compartment 503, at any distance from and in any position with respect to the vending van 500.

In particular, the above mentioned distance may be such as to allow the operator U to stand on the ground and/or pass comfortably between the counter 1 and the side of the vending van 500 for the sale of the products, as shown in Figure 10.

It is worth noting that the control unit if necessary may also be programmed in such a way as to move the counter 1 to a predefined distance from the side of the vending van 500, and/or at a predefined working height, cooperating with the means for recording said distance.

The energy necessary for the operation of the actuator means and/or of the control unit may be supplied by the vehicle or by independent power sources like for example accumulators and/or batteries or by the power mains.

It is clear that, in other embodiments of the invention, the actuator means of the telescopic legs 6 may be activated even manually, for example using a crank that, once set rotating, moves the worm screw through kinematic mechanisms.

The above clearly shows that the proposed solution makes it possible to overcome the drawbacks described above and to achieve the set objects.

Advantageously, the proposed solution enables the counter 1 to be moved and/or unloaded from the vending van 500 with no need to use complicated systems and/or mechanisms installed on the vending van or separate from the vending van.

Although the invention has been described with reference to the attached drawings, it may undergo modifications in subsequent stages of its implementation that shall all come within the scope of the invention expressed in the following claims and shall consequently be covered by the present patent.

It is also worth noting that where the characteristics mentioned in the following claims are followed by reference signs, these are used merely to facilitate the readability of the claim itself and shall not be seen as limiting its interpretation in any way.

It is important to underline, moreover, that all the components may be replaced by other, technically equivalent parts and that any materials may be used, provided that they are compatible with the intended usage, and the various elements may be of any size, according to need.

## Claims

1. Counter (1) for vending vans comprising a glass counter top (2) suited to contain the goods to be exhibited, said counter comprising at least one withdrawable supporting element (3) provided with at least one support (5) suited to be placed in contact with the ground (S), **characterized in that** said at least one support (5) is motorized and comprises at least one track (6) or one or more wheels and/or balls moved by power means.

2. Counter according to claim 1, characterize in that said at least one supporting element (3), when arranged in contact with the ground (S), makes it possible to sustain said glass counter top (2) and to move said counter (1) independently of the vending van.

3. Counter according to claims 1 or 2, **characterized in that** there are two of said at least one supporting element (3).

4. Counter according to claim 1 or 2 or 3, **characterized in that** said at least one supporting element (3) comprises a supporting member (4) connected to the glass counter top (2) at one end and to said support (5) at the other end.

5. Counter according to claim 4, **characterized in that** each supporting member (4) is suited to raise/lower said counter (1) with respect to the ground (S).

6. Counter according to any of the preceding claims, **characterized in that** each supporting member (4) comprises at least one telescopic leg (6).

7. Counter according to any of the claims from 1 to 5, **characterized in that** said supporting members (4) comprise at least one leg of the so-called articulated parallelogram type.

8. Counter according to claims 7, **characterized in that** said supporting members (4) are operated by actuator means that are manually or automatically controlled via a control unit.

9. Counter according to claim 8, **characterized in that** said actuator means comprise a hydraulic and/or pneumatic piston and/or a mechanic system.

10. Counter according to claims 1 to 9, **characterized in that** said power means comprise at least one motor, preferably of the electric and/or combustion and/or pneumatic and/or hydraulic type.

11. Counter according to claims 1 or 10, **characterized in that** said at least one supporting clement (3) comprises idle wheels and/or rotating elements.

12. Counter according to any of the preceding claims, **characterized in that** at least one of said at least one supporting elements (3) is a steering element

13. Counter according to any of the preceding claims, **characterized in that** it also comprises a control unit suited to control the raising/lowering movements of said counter (1) with respect to the ground (S) along a vertical axis.

14. Counter according to any of the claims from 1 to 13, **characterized in that** it also comprises a control unit suited to control the forward/backward travel movements of said counter (1) along a horizontal plane.

15. Counter according to claim 13 or 14, **characterized in that** said control unit comprises interface means that can be used by the operator to move said counter (1).

16. Counter according to claim 15, **characterized in that** said interface means comprise a push button and/or a keyboard and/or a display.

17. Counter according to claims 15 or 16, **characterized in that** said control unit also comprises a remote control unit.

18. Counter according to claims 14 or 15 or 16 or 17, **characterized in that** said control unit also comprises means for recording the position assumed by the counter (1) with respect to the ground (S) and/or to a vending van (500).

19. Counter according to any of the claims from 14 to 18, **characterized in that** said control unit also comprises electronic levelling means suited to automatically control said at least one supporting member (3) to level said counter (1) and keep said glass counter top (2) substantially horizontal.

20. Vending van (500) comprising a motorized vehicle provided with a chassis (501) supporting a platform (502) that defines a loading area (503) suited to house at least one counter (I) intended to display the goods to the public for sale, **characterized in that** said platform (502) is provided with at least one through opening (504), suited to receive a supporting element (3) of said counter (1), said supporting element (3) being of the withdrawable and/or telescopic type.

21. System for itinerant sales comprising:
- a vending van (500) comprising a motorized vehicle provided with a chassis (501) supporting a platform (502) that defines a loading area (503);
- at least one counter (I) comprising a glass counter top (2) suited to contain the goods for display to the public and suited to be placed in said loading area;
**characterized in that** said platform (502) is provided with at least one through opening (504), suited to receive at least one supporting element (3) of said counter (1), said counter (1) being carried out according to any of the claims from 1 to 21.

22. System according to claim 21, **characterized in that** when said counter (1) is arranged with said at least one withdrawable supporting element (3) at the level of said at least one through opening (504), said at least one support (5) can be moved from a first resting position raised from the ground (S) into at least a second working position in which said at least one support (5) is in contact with the ground (S), in order to enable said counter (1) to be moved and/or unloaded from said loading area (503).

## Patentansprüche

1. Verkaufstheke (1) für Verkaufswagen, einen gläsernen Thekenaufbau (2) umfassend, der geeignet ist, die auszustellenden Waren aufzunehmen, wobei diese Theke wenigstens ein einziehbares Abstützelement (3) umfasst mit wenigstens einer Stütze (5), die geeignet ist, mit dem Boden (S) in Kontakt gebracht zu werden, **dadurch gekennzeichnet, dass** die besagte, wenigstens eine Stütze (5) durch einen Motor angetrieben wird und wenigstens eine Spur (6) oder ein oder mehrere, durch Antriebsmittel bewegte Räder und/oder Rollen umfasst.

2. Verkaufstheke gemäß Patentanspruch 1, **dadurch gekennzeichnet, dass** das besagte, wenigstens eine Abstützelement (3) es bei Positionierung in Kontakt mit dem Boden (S) ermöglicht, den besagten, gläserne Thekenaufbau (2) zu stützen und die besagte Verkaufstheke (1) unabhängig vom Verkaufswagen zu bewegen.

3. Verkaufstheke gemäß den Patentansprüchen 1 oder 2, **dadurch gekennzeichnet, dass** zwei Stück des besagten, wenigstens einen Abstützelements (3) vorhanden sind.

4. Verkaufstheke gemäß Patentanspruch 1 oder 2 oder 3, **dadurch gekennzeichnet, dass** das wenigstens eine Abstützelement (3) ein Stützteil (4) umfasst, das an einem Ende am gläsernen Thekenaufbau (2) und am anderen Ende an der besagten Stütze (5) angeschlossen ist.

5. Verkaufstheke gemäß Patentanspruch 4, **dadurch gekennzeichnet, dass** jedes Stützteil (4) geeignet ist, die besagte Verkaufstheke (1) bezüglich des Bodens (S) anzuheben/abzusenken.

6. Verkaufstheke gemäß eines jeglichen der vorstehenden Patentansprüche, **dadurch gekennzeichnet, dass** jedes Stützteil (4) wenigstens ein Teleskopbein (6) umfasst.

7. Verkaufstheke gemäß eines jeglichen der vorstehenden Patentansprüche von 1 bis 5, **dadurch gekennzeichnet, dass** die besagten Stützteile (4) wenigstens ein Bein vom so genannten Typ des Gelenkparallelogramms umfassen.

8. Verkaufstheke gemäß den Patentansprüchen 7, **dadurch gekennzeichnet, dass** die besagten Stützteile (4) durch manuell oder automatisch über eine Steuereinheit gesteuerte Aktuatormittel betätigt werden.

9. Verkaufstheke gemäß Patentanspruch 8, **dadurch gekennzeichnet, dass** die besagten Aktuatormittel einen hydraulischen und/oder pneumatischen Kolben und/oder ein mechanisches System umfassen.

10. Verkaufstheke gemäß den Patentansprüchen 1 bis 9, **dadurch gekennzeichnet, dass** die besagten Antriebsmittel wenigstens einen Motor umfassen, vorzugsweise vom Typ eines Elektro- und/oder Verbrennungs- und/oder eines Pneumatik- und/oder Hydraulikmotors.

11. Verkaufstheke gemäß den Patentansprüchen 1 oder 10, **dadurch gekennzeichnet, dass** das besagte wenigstens eine Abstützelement (3) freilaufende Räder und/oder rotierende Elemente umfasst.

12. Verkaufstheke gemäß eines jeglichen der vorstehenden Patentansprüche, **dadurch gekennzeichnet, dass** wenigstens eines des besagten wenigstens einen Abstützelements (3) ein Lenkelement ist.

13. Verkaufstheke gemäß eines jeglichen der vorstehenden Patentansprüche, **dadurch gekennzeichnet, dass** sie außerdem eine Steuereinheit für die Kontrolle der Auf-/Abwärtsbewegungen der besagten Verkaufstheke (1) bezüglich des Bodens (S) entlang einer senkrechten Achse umfasst.

14. Verkaufstheke gemäß eines jeglichen der vorstehenden Patentansprüche von 1 bis 13, **dadurch gekennzeichnet, dass** sie außerdem eine Steuereinheit für die Kontrolle der Vor- und Rückwärtsfahrbewegungen der besagten Verkaufstheke (1) entlang einer waagerechten Ebene umfasst.

15. Verkaufstheke gemäß Patentanspruch 13 oder 14, **dadurch gekennzeichnet, dass** die besagte Steuereinheit Schnittstellenmittel umfasst, die der Bediener zur Bewegung der besagten Verkaufstheke (1) benutzen kann.

16. Verkaufstheke gemäß Patentanspruch 15, **dadurch gekennzeichnet, dass** die besagten Schnittstellenmittel einen Drucktaster und/oder eine Tastatur und/oder ein Display umfassen.

17. Verkaufstheke gemäß den Patentansprüchen 15 oder 16, **dadurch gekennzeichnet, dass** die besagte Steuereinheit auch eine Fernsteuereinheit umfasst.

18. Verkaufstheke gemäß den Patentansprüchen 14 oder 15 oder 16 oder 17, **dadurch gekennzeichnet, dass** die besagte Steuereinheit auch Mittel zur Aufzeichnung der durch die Verkaufstheke (1) eingenommenen Position bezüglich des Bodens (S) und/oder eines Verkaufswagens (500) umfasst.

19. Verkaufstheke gemäß eines jeglichen der vorstehenden Patentansprüche von 14 bis 18, **dadurch gekennzeichnet, dass** die besagte Steuereinheit auch elektronische Nivelliermittel umfasst, die geeignet sind, das besagte, wenigstens eine Abstützelement (3) automatisch zu steuern, um die besagte Verkaufstheke (1) zu nivellieren und den besagten gläsernen Thekenaufbau (2) im Wesentlichen waagerecht zu halten.

20. Verkaufswagen (500), ein Motorfahrzeug mit einem Fahrgestell (501) umfassend, welches eine Plattform (502) trägt, die einen Ladebereich (503) definiert, die geeignet ist, wenigstens eine Verkaufstheke (1) aufzunehmen, um die Waren dem Publikum zum Verkauf auszustellen, **dadurch gekennzeichnet, dass** die besagte Plattform (502) mit wenigstens einer durchgehenden Öffnung (504) versehen ist, die geeignet ist, ein Abstützelement (3) für die besagte Verkaufstheke (1) aufzunehmen, wobei das besagte Abstützelement (3) vom einziehbaren und/oder ausfahrbaren Typ ist.

21. System für den Fahrverkauf, Folgendes umfassend:
- einen Verkaufswagen (500), ein Motorfahrzeug mit einem Fahrgestell (501) umfassend, welches eine Plattform (502) trägt, die einen Ladebereich (503) definiert;
- wenigstens eine Verkaufstheke (1) die einen gläsernen Thekenaufbau (2) für die Aufnahme der dem Publikum auszustellenden Waren umfasst und die geeignet ist, im besagten Ladebereich positioniert zu werden,
**dadurch gekennzeichnet, dass** die besagte Plattform (502) mit wenigstens einer durchgehenden Öffnung (504) für die Aufnahme des wenigstens einen Abstützelements (3) der besagten Verkaufstheke (1) versehen ist, wobei die besagte Verkaufstheke (1) gemäß eines jeglichen der vorstehenden Patentansprüche von 1 bis 21 ausgeführt ist.

22. System gemäß Patentanspruch 21, **dadurch gekennzeichnet, dass** wenn die besagte Verkaufstheke (1) mit dem wenigstens einen einziehbaren Abstützelement (3) auf der Ebene der wenigstens einen durchgehenden Öffnung (504) positioniert ist, die besagte wenigstens eine Stütze (5) aus einer ersten, vom Boden (S) angehobenen Ruheposition in wenigstens eine zweite Arbeitsposition bewegt werden kann, in welcher die wenigstens eine Stütze (5) in Kontakt mit dem Boden (S) ist, um die besagte Verkaufstheke (1) bewegen und/oder aus dem besagten Ladebereich (503) abladen zu können.

## Revendications

1. Comptoir (1) pour camion magasins comprenant une vitrine d'exposition (2) apte à contenir les marchandises à exposer, ledit comptoir comprenant au moins un élément de support escamotable (3) doté d'au moins un support (5) apte à être positionné en contact avec le sol (S), **caractérisé en ce que** ledit au moins un support (5) est motorisé et comprend au moins un rail (6) ou une ou plusieurs roues et/ou sphères actionnées par des moyens de motorisation.

2. Comptoir selon la revendication 1, **caractérisé en ce que** ledit au moins un élément de support (3), quand il est mis en contact avec le sol (S), permet de soutenir ladite vitrine d'exposition (2) et de déplacer ledit comptoir (1) indépendamment du camion magasin.

3. Comptoir selon les revendications 1 ou 2, **caractérisé en ce qu'**il y a deux dudit au moins un élément de support (3).

4. Comptoir selon les revendications 1, 2 ou 3, **caractérisé en ce que** ledit au moins un élément de support (3) comprend une pièce de support (4) reliée à la vitrine d'exposition (2) d'un côté et audit support (5) de l'autre côté.

5. Comptoir selon la revendication 4, **caractérisé en ce que** chaque pièce de support (4) est indiquée pour lever/baisser ledit comptoir (1) par rapport au sol (S).

6. Comptoir selon l'une des revendications précédentes, **caractérisé en ce que** chaque pièce de support (4) comprend au moins une jambe télescopique (6).

7. Comptoir selon l'une quelconque des revendications de 1 à 5, **caractérisé en ce que** lesdites pièces de support (4) comprennent au moins une jambe du type dit à parallélogramme articulé.

8. Comptoir selon les revendications 7, **caractérisé en ce que** lesdites pièces de support (4) sont actionées par des moyens actionneurs qui sont commandés manuellement ou automatiquement par une unité de commande.

9. Comptoir selon la revendication 8, **caractérisé en ce que** lesdits moyens actionneurs comprennent un piston hydraulique et/ou pneumatique et/ou un système mécanique.

10. Comptoir selon les revendications de 1 à 9, **caractérisé en ce que** lesdits moyens de motorisation comprennent au moins un moteur, préférablement du type électrique et/ou à combustion et/ou pneumatique et/ou hydraulique.

11. Comptoir selon les revendications 1 ou 10, **caractérisé en ce que** ledit au moins un élément de support (3) comprend des roues folles et/ou des éléments pivotants.

12. Comptoir selon l'une quelconque des revendications précédentes, **caractérisé en ce qu'**au moins un desdits au moins un élément de support (3) est un élément de direction.

13. Comptoir selon l'une quelconque des revendications précédentes, **caractérisé en ce qu'**il comprend aussi une unité de commande indiquée pour coimnander les mouvements de montée/descente dudit comptoir (1) par rapport au sol (S) le long d'un axe vertical.

14. Comptoir selon l'une des revendications de 1 à 13, **caractérisé en ce qu'**il comprend également une unité de commande indiquée pour commander les mouvements de translation en avant/en arrière dudit comptoir (1) le long d'un axe horizontal.

15. Comptoir selon les revendications 13 ou 14, **caractérisé en ce que** ladite unité de commande comprend des moyens d'interface pouvant être utilisés par l'opérateur pour déplacer ledit comptoir (1).

16. Comptoir selon la revendication 15, **caractérisé en ce que** lesdits moyens d'interface comprennent un bouton-poussoir et/ou un clavier et/ou un afficheur.

17. Comptoir selon les revendications 15 ou 16, **caractérisé en ce que** ladite unité de commande comprend également une télécommande.

18. Comptoir selon les revendications 14, 15, 16 ou 17, **caractérisé en ce que** ladite unité de commande comprend aussi des moyens pour l'enregistrement de la position prise par le comptoir (1) par rapport au sol (S) et/ou à un camion magasin (500),

19. Comptoir selon l'une quelconque des revendications de 14 à 18, **caractérisé en ce que** ladite unité de commande comprend aussi des moyens de nivelage électroniques indiqués pour commander automatiquement ladite au moins une pièce de support (3), pour niveler ledit comptoir (1) et pour maintenir ladite vitrine d'exposition (2) essentiellement horizontale.

20. Camion magasin (500) comprenant un véhicule motorisé doté d'un châssis (501) supportant une plate-forme (502) qui définit une zone de charge (503) indiquée pour loger au moins un comptoir (1) apte à exposer les marchandises au public pour la vente, **caractérisé en ce que** ladite plate-forme (502) est dotée d'au moins une ouverture passante (504), indiquée pour recevoir un élément de support (3) dudit comptoir (1), ledit élément de support (3) étant du type escamotable et/ou télescopique.

21. Système pour la vente ambulante comprenant :
- un camion magasin (500) comprenant un véhicule motorisé doté d'un châssis (501) soutenant une plate-forme (502) qui définit une zone de charge (503) ;
- au moins un comptoir (1) comprenant une vitrine d'exposition (2) indiquée pour contenir les marchandises pour l'exposition au public et indiquée pour être positionnée dans ladite zone de charge ;
**caractérisé en ce que** ladite plate-forme (502) est dotée d'au moins une ouverture passante (504), indiquée pour recevoir au moins un élément de support (3) dudit comptoir (1), ledit comptoir (1) étant réalisé selon l'une quelconque des revendications de 1 à 21.

22. Système selon la revendication 21, **caractérisé en ce que** quand ledit comptoir (1) est positionné avec ledit au moins un élément de support escamotable (3) à hauteur de ladite au moins une ouverture passante (504), ledit au moins un support (5) peut être déplacé d'une première position de repos soulevée du sol (S) à au moins une deuxième position de travail dans laquelle ledit au moins un support (5) est en contact avec le sol (S), de façon à ce que ledit comptoir (1) puisse être déplacé et/ou déchargé de ladite zone de charge (503).
